# FASCICULE DE BREVET EUROPEEN

(11) **EP 0 752 206 B1**
(45) Date de publication et mention de la délivrance du brevet: **07.10.1998**
(21) Numéro de dépôt: 96401464.1
(22) Date de dépôt: 03.07.1996
(51) Int. Cl.: A01K 7/02

(54) **Perfectionnement aux abreuvoirs chauffants pour le bétail**
Beheiztes Viehtränkbecken
Heated drinker for livestock

(30) Priorité: 05.07.1995 FR 9508097
(43) Date de publication de la demande: 08.01.1997
(73) Titulaire: LA BUVETTE, 08090 Charleville Mezieres (FR)
(72) Inventeur: Gustin, Jean-Pierre, 08000 Charleville Mezieres (FR)
(74) Mandataire: Loyer, Bertrand

(56) Documents cités:
- DE-U- 9 320 193
- FR-A- 2 555 019
- FR-A- 2 601 847
- US-A- 2 914 025

## Description

Dans le brevet n° 83.18472, publié sous le n° 2.555.019, déposé par la demanderesse, on a décrit un abreuvoir chauffant constitué par deux enceintes distinctes de volumes différents, la plus grande contenant une réserve importante d'eau chauffée à une température modérée, la deuxième, servant de bol d'abreuvage, étant encastrée dans la première qui la réchauffe de façon analogue à un bain-marie.

Dans le brevet français n° 86.10679 également au nom de la demanderesse, on a décrit un abreuvoir constitué par un réservoir cylindrique, rempli d'eau chaude, ce réservoir étant muni, sur ses côtés d'une pluralité de bols d'abreuvage munis chacun d'une robinetterie commandée par l'animal.

Dans le modèle d'utilité allemand n° 93.20193 on a également décrit un abreuvoir comportant un réservoir central comportant de l'eau chaude autour duquel sont disposés des bols d'abreuvage dont les parois s'enfoncent dans le volume dudit réservoir central.

La présente invention concerne un perfectionnement à ce type d'abreuvoir, la forme de l'abreuvoir étant déterminée de façon que les bols d'abreuvage soient séparés les uns des autres par des cloisons verticales, ces cloisons verticales étant des portions du réservoir central.

La présente invention concerne un abreuvoir chauffant pour le bétail du type comportant un corps central, formant réservoir d'eau chaude, autour duquel sont disposés une pluralité de bois d'abreuvage caractérisé par le fait que ledit corps central est muni d'une pluralité d'échancrures verticales s'étendant sur la portion supérieure de la hauteur du corps, chacune se terminant à sa base par un épaulement dans lequel est encastré un bol d'abreuvage muni d'une robinetterie commandée par l'animal ; les portions en saillie du corps central comprises entre les échancrures constituant des séparations entre les différents postes d'abreuvage, permettant à plusieurs animaux de s'abreuver simultanément sans se battre entre eux.
De préférence, la partie centrale comporte au moins deux échancrures s'étendant sur la hauteur de ladite partie centrale, cette dernière étant telle que la hauteur de chaque échancrure est environ trois fois plus grande que celle de l'épaulement.
Une telle disposition présente les avantages suivants :
- les bols d'abreuvage étant encastrés dans les épaulements du réservoir d'eau chaude, l'eau que l'animal y fait couler en actionnant la robinetterie est maintenue chaude,
- les échancrures sont suffisamment profondes pour constituer des sortes d'encoignures dans lesquelles les animaux enfoncent leurs museaux sans qu'il n'y ait de luttes entre eux.
A titre d'exemple non limitatif et pour faciliter la compréhension de l'invention, on a représenté aux dessins annexés :
Figure 1, une vue en perspective d'un mode de réalisation de l'invention ;
Figure 2, une vue de face, à échelle réduite, du dispositif de la figure 1 ;
Figure 3, une vue en plan, à échelle réduite, du dispositif de la figure 1 :
Figure 4, une vue latérale, à échelle réduite, du dispositif de la figure 1 ;
Figure 5, une vue en plan d'une variante de réalisation.

En se reportant à ces figures, on voit que l'abreuvoir chauffant, selon l'invention, est constitué par un corps creux 1, destiné à être rempli d'eau chauffée à une température modérée (entre 14° et 20°).

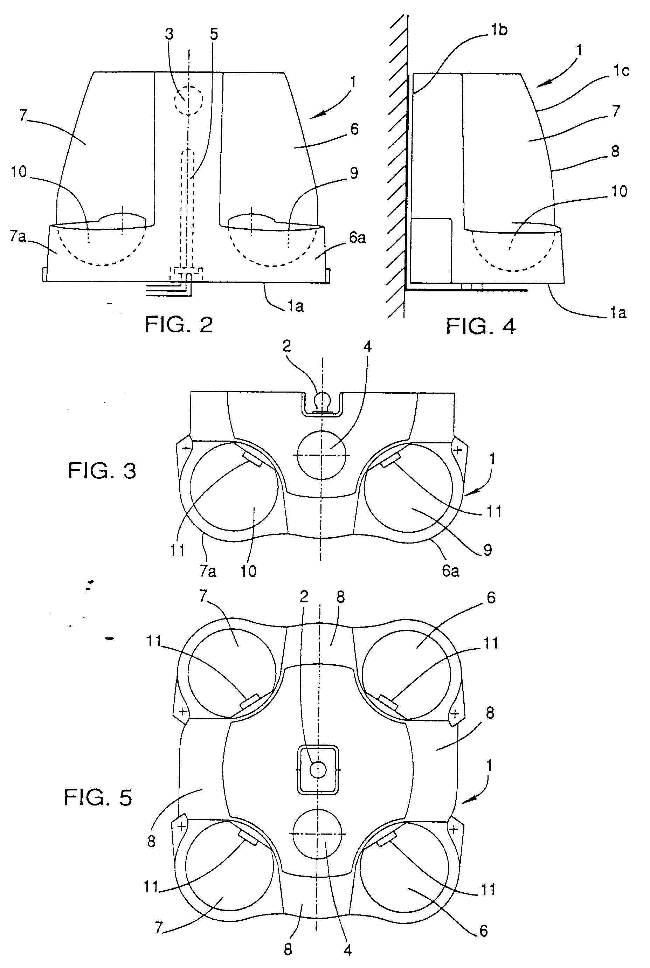

Ce corps constitue un réservoir d'eau chaude qui est alimenté par une canalisation d'arrivée d'eau 2 (figure 3) munie d'une robinetterie à flotteurs 3 (figure 2) de type connu et d'un bouchon 4. A l'intérieur du réservoir 1 est disposée une résistance chauffante 5.

Ce corps 1 à un fond plat 1a, un dos plat 1b et une face avant 1c bombée ou en protubérance. La canalisation d'eau 2 est logée dans un évidement ménagé dans la face arrière ou dos 1b. Dans cette face avant 1c, sont ménagés deux logements en creux ou échancrures 6-7, de sorte qu'entre deux échancrures 6 et 7, se trouve une portion en saillie 8.

Ces deux échancrures 6 et 7 ne s'étendent pas sur toute la hauteur du corps 1, mais seulement sur la portion supérieure de celle-ci ; de façon à ménager à leur base un épaulement 6a, 7a.

Dans ces épaulements creux 6a, 7a, sont ménagés deux bols 9 et 10, qui ont une forme analogue aux bols d'abreuvage connus.

Ces bols 9 et 10 sont munis des robinetteries usuelles de bois d'abreuvage pour animaux, c'est-à-dire d'un robinet à palette 11 qui, sur la poussée effectuée par l'animal avec son museau, ouvre la communication entre le réservoir et le bol.

Lesdits bols 9 et 10 peuvent, selon une variante non représentée, être équipés d'un système à flatteur vertical rendant l'alimentation des bols 9 et 10 en "niveau constant", en particulier pour les animaux jeunes qui n'appuient pas toujours sur la palette 11.

Le fonctionnent du dispositif ainsi décrit est décrit ci-après.

Le réservoir constitué par le corps 1 est de façon constante rempli d'eau au moyen du robinet à flatteur 3, relié à la canalisation 2 d'alimentation en eau. Cette eau est maintenue à la température voulue (14° - 20°) par la résistance chauffante 5 munie d'un thermostat.

Lorsqu'un animal appuie sur l'une ou l'autre des palettes 11, le bol correspondant 9 ou 10 se remplit d'eau chauffée que l'animal peut boire.

De préférence, les bols 9 et 10 sont à fonds aplatis afin qu'il ne reste que peu d'eau aux fonds des bols, cette eau étant susceptible d'être polluée, car elle est au contact de l'air, ce qui n'est pas le cas de l'eau contenue dans le réservoir, qui est, elle, à l'abri de l'air.

Comme illustré par la pièce de fixation en L 12, l'abreuvoir peut être fixé à un mur. Il peut aussi reposer par sa base 1 sur un support posé sur le sol.

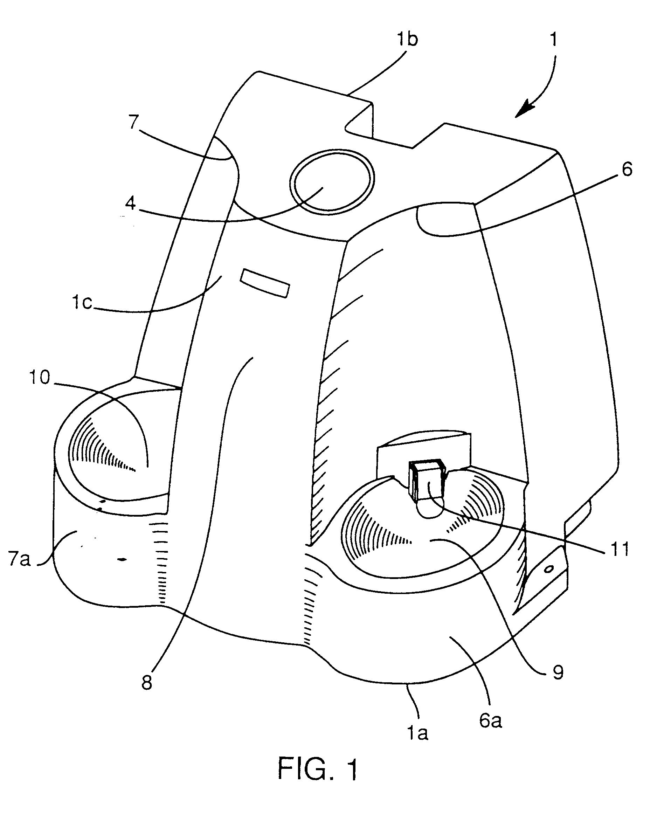

Dans l'exemple représenté aux figures 1 à 4, on a disposé seulement deux échancrures 6 et 7 et donc seulement deux bols 9 et 10, mais l'invention n'est pas limitée à ce cas précis. Comme représenté à la figure 5, on peut disposer quatre bols, et en disposant judicieusement les échancrures 6 ou 7, et donc les bols qui sont à leur base, on peut en disposer plus. Par exemple, on peut avoir un corps 1 circulaire avec une couronne d'échancrures, tels que 6 ou 7, disposés tout autour, ces échancrures étant séparées par des portions en saillie, telles que 8.

Les portions en saillie, telles que 8, qui séparent les bols, tels que 9 ou 10, doivent toujours être assez importantes pour constituer des séparations qui permettent que plusieurs animaux puissent s'abreuver simultanément sans se battre en eux.

## Revendications

1. Abreuvoir chauffant pour le bétail du type comportant un corps central formant réservoir d'eau chaude, autour duquel sont disposés une pluralité dé bols d'abreuvage caractérisé par le fait que ledit corps central (1) est muni d'une pluralité d'échancrures verticales (6, 7) s'étendant sur la portion supérieure de la hauteur du corps (1), chacune se terminant à sa base par un épaulement (6a, 7a), dans lequel est ménagé un bol d'abreuvage (9, 10) muni d'une robinetterie d'alimentation en eau provenant du réservoir central (1) ; les portions en saillie (8) du réservoir central comprises entre les échancrures (6, 7) constituant des séparations entre les différents postes d'abreuvage permettant à plusieurs animaux de s'abreuver simultanément sans se battre entre eux.

2. Abreuvoir selon la revendication 1, caractérisé par le fait que le corps (1) faisant réservoir comporte un dos (1b) plat, une face avant (1c) en protubérance, deux échancrures (6, 7) séparées par une portion en saillie (8) et deux bols (9, 10) encastrés dans la base (6a, 7a) desdites échancrures.

3. Abreuvoir selon la revendication 2, caractérisé par le fait que le corps (1) faisant réservoir est muni d'une pluralité d'échancrures (6, 7) disposées en couronne tout autour de la partie centrale dudit corps (1), lesdites échancrures étant séparées par des portions en saillie (8).

4. Abreuvoir selon l'une quelconque des revendications précédentes, dans lequel les bols (9, 10) sont munis soit d'une palette (11) que l'animal pousse du museau, soit d'un robinet à flotteur.

## Claims

1. A heated drinking station for cattle, of the type comprising a central body forming a reservoir of hot water, around which are arranged a plurality of drinking bowls, characterised by the fact that said central body (1) is provided with a plurality of vertical cutouts (6, 7) extending over the upper portion of the height of the body (1), each ending at its base in a shoulder (6a, 7a), in which there is formed a drinking bowl (9, 10) provided with tap fittings for supplying water coming from the central reservoir (1); the projecting portions (8) of the central reservoir located between the cutouts (6, 7) forming separations between the different drinking positions enabling several animals to drink simultaneously without fighting each other.

2. A drinking station according to Claim 1, characterised by the fact that the body (1) forming the reservoir comprises a flat back (1b), a protruding front face (1c), two cutouts (6, 7) separated by a projecting potion (8) and two bowls (9, 10) built into the base (6a, 7a) of said cutouts.

3. A drinking station according to Claim 2, characterised by the fact that the body (1) forming the reservoir is provided with a plurality of cutouts (6, 7) arranged in a ring all around the central part of said body (1), said cutouts being separated by projecting portions (8).

4. A drinking station according to any one of the preceding claims, in which the bowls (9, 10) are provided either with a vane (11) which the animal pushes with its nose or with a float cock.

## Patentansprüche

1. Beheiztes Viehtränkbecken des Typs mit einem zentralen Körper, der einen Behälter für warmes Wasser ausbildet, um den herum eine Vielzahl von Tränkschalen angeordnet sind,
**dadurch gekennzeichnet,** daß der zentrale Körper (1) mit einer Vielzahl von vertikalen Aussparungen (6, 7) versehen ist, die sich über den oberen Bereich der Höhe des Körpers (1) erstrecken, wobei jede an ihrer Basis in einer Schulter (6a, 7a) ausläuft, in der eine Tränkschale (9, 10) ausgebildet ist, die mit Armaturen zur Versorgung mit Wasser, das von dem zentralen Behälter (1) stammt, ausgestattet ist, wobei die vorstehenden Bereiche (8) des zentralen Behälters, die zwischen den Aussparungen (6, 7) eingeschlossen sind, Abtrennungen zwischen den verschiedenen Tränkstellen bilden, die es erlauben, daß mehrere Tiere gleichzeitig trinken können, ohne dabei aneinanderzustoßen.

2. Tränkbecken nach Anspruch 1, dadurch gekennzeichnet, daß der Körper (1), der den Behälter bildet, ein flaches Rückenteil (1b), eine vorstehende Vorderseite (1c), zwei Aussparungen (6, 7), die durch einen vorstehenden Bereich (8) voneinander getrennt sind, und zwei Behälter (9, 10) umfaßt, die in die Basis (6a, 7a) der Aussparungen eingebaut sind.

3. Tränkbecken nach Anspruch 2, dadurch gekennzeichnet, daß der Körper (1), der den Behälter bildet, mit einer Vielzahl Aussparungen (6, 7) versehen ist, die oben um den gesamten Mittelteil des Körpers (1) herum angeordnet sind, wobei die Aussparungen durch vorstehende Bereiche (8) voneinander getrennt sind.

4. Tränkbecken nach einem der vorhergehenden Ansprüche, bei dem die Behälter (9, 10) entweder mit einem Schieber (11), den das Tier mit der Schnauze drückt, oder mit einem Schwimmerhahn ausgestattet sind.
